# EUROPEAN PATENT APPLICATION

(11) **EP 2 602 047 A1**
(43) Date of publication of application: **12.06.2013**
(21) Application number: 12187048.9
(22) Date of filing: 02.10.2012
(51) Int. Cl.: B23K 26/10, B23K 26/08, B23K 26/04

(54) **System and methods for internal cavity formation using laser manipulation**

(30) Priority: 06.12.2011 US 201113312552
(71) Applicant: General Electric Company, Schenectady, NY 12345 (US)
(72) Inventor: ROBERTS lll,, Herbert Chidsey, Greenville, SC South Carolina 29615 (US); TAXACHER, Glenn Curtis, Greenville, SC South Carolina 29615 (US)
(74) Representative: Cleary, Fidelma

(57) **Abstract**

A laser machining system useful for machining internal cavities where visual monitoring is difficult or impossible may include a laser generator (110), a rod (111) configured to extend from and retract towards the laser generator (110), an articulated mirror (112) mounted on the rod (111) and configured to reflect a laser beam (113) generated by the laser generator (110), one or more sensors (140,141), and a controller (120) that may receive data from the sensor (140,141) and determine how and whether to manipulate, based on the data, the rod (111) and the articulated mirror (112) to direct the laser beam (113) generated by the laser generator (110).

## Description

### TECHNICAL FIELD

The present disclosure relates to systems and methods for material processing and in particular to systems and methods for shaping internal cavities using lasers.

### BACKGROUND

Changing the shape and size of objects made of various materials by removing some of that material has been accomplished using machining techniques for nearly as as long as people have been using tools. While at one time machining was primarily performed on metals, more advanced materials such as advanced alloys, ceramics, and composites that may combine metals, ceramiacs, and other materials are commonly machined today. The means of machining have also progressed, moving beyond physical extraction of material from an object by processes such as milling, boring, *etc.* to include new technologies such electrical discharge machining, electrochemical machining, electron beam machining, photochemical machining, laser machining, and ultrasonic machining. Even with the advancement of machining and materials technology, certain types of machining still present challenges. Among those challenges are the difficulty of controlling of a machining device in a space (*e.g*., an internal cavity) where no visual access is available and controlling of a machining device in such a space so that exact depths and forms can be achieved in the machining process.

### BRIEF DESCRIPTION OF THE INVENTION

According to one aspect of the invention, a system is disclosed for laser machining that comprise a laser generator, a rod configured to extend from and retract towards the laser generator, an articulated mirror mounted on the rod and configured to reflect a laser beam generated by the laser generator, one or more thermal sensors, and a controller that may receive data from the thermal sensor(s) and determine how and whether to manipulate, based on the data, the rod and the articulated mirror to direct the laser beam generated by the laser generator. The data received by the controller may include two-dimensional or three-dimensional coordinates of a contact point at which the laser beam is coming in contact with the object at which it is directed. The data received may also, or instead, be data that the controller can use to determine such coordinates. The controller may instruct, direct, or otherwise cause the rod to extend and retract relative to the laser generator and/or rotate about an axis formed by the laser beam. The controller may also instruct, direct, or otherwise cause the articulated mirror to rotate about an axis formed by a diameter of the articulated mirror.

According to another aspect of the invention, multiple thermal sensors may be used to detect or generate three-dimensional coordinates for a contact point. Alternatively, data from multiple thermal sensors may be used by a controller to determine three-dimensional coordinates. In some embodiments, a single thermal sensor may be used and three-dimensional coordinated may be determined based on two-dimensional coordinates and additional data, such as reflectivity time measurements, heat detected, etc.

In another aspect of the present invention, the controller may compare the determined location of the contact point to one or more maps, schematics, plans, etc. configured on the controller to determine if additional material is to be removed at the contact point. If no additional material is to be removed from the contact point, the controller may move the contact point by manipulating one or more of the rod and articulated mirror so that material may be removed from other areas of the object from which the laser beam is removing material. If no additional material is to be removed from the object altogether, the controller may instruct, direct, or otherwise cause the laser generator to cease emission of the laser beam.

The foregoing summary, as well as the following detailed description, is better understood when read in conjunction with the drawings. For the purpose of illustrating the claimed subject matter, there is shown in the drawings examples that illustrate various embodiments; however, the invention is not limited to the specific systems and methods disclosed.

### BRIEF DESCRIPTION OF THE DRAWINGS

Embodiments of the present invention will now be described, by way of example only, with reference to the accompanying drawings in which:
Figure 1 is a block diagram of a non-limiting exemplary laser machining system according to one embodiment of the present disclosure.
Figure 2 is another block diagram of a non-limiting exemplary laser machining system according to one embodiment of the present disclosure.
Figure 3 is another block diagram of a non-limiting exemplary laser machining system.
Figure 4 is another block diagram of a non-limiting exemplary laser machining system according to one embodiment of the present disclosure.
Figure 5 is another block diagram of a non-limiting exemplary laser machining system according to one embodiment of the present disclosure.
Figure 6 is another block diagram of a non-limiting exemplary laser machining system according to one embodiment of the present disclosure.
Figure 7 is a non-limiting exemplary method of performing an embodiment of the present disclosure.
Figure 8 is a block diagram of a non-limiting exemplary processor in which embodiments of the present disclosure may be implemented.

### DETAILED DESCRIPTION OF THE INVENTION

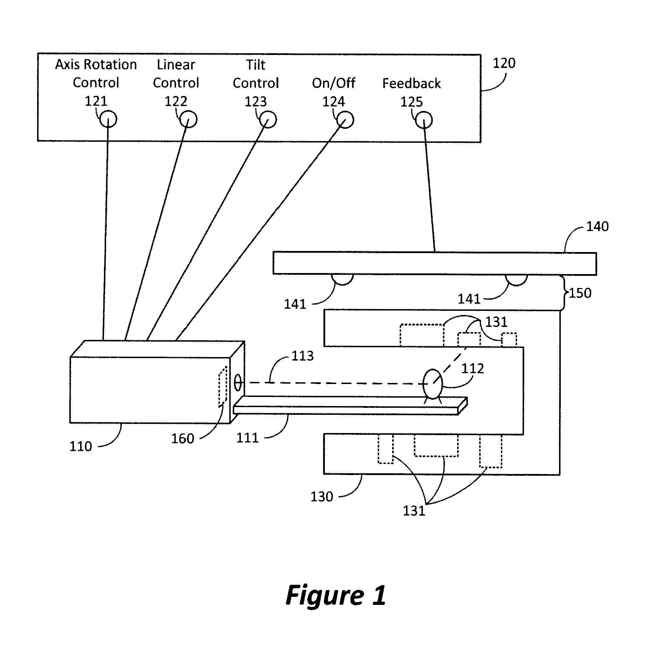

Figure 1 illustrates an exemplary non-limiting system according to an embodiment of the present disclosure. Laser beam generator 110 may be configured to produce any type of light, electromagnetic radiation, or other beam emission that may be used to alter or affect a material. In an embodiment, generator 110 may generate laser beam 113 that may be a type of laser capable of machining one or more types of material.

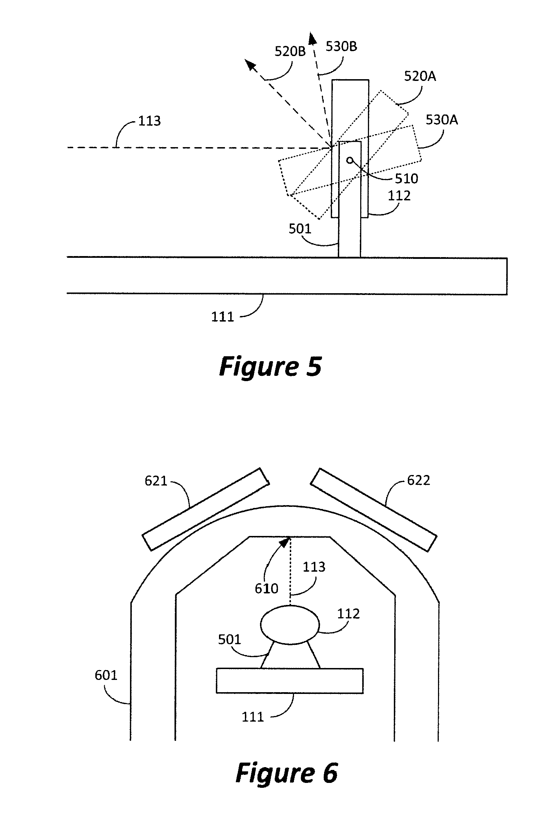

Rod 111 may be connected or otherwise proximate to generator 110 and may be connected to articulated mirror 112. Rod 111 may be configured to extend out of and retract into a housing of generator 110, and to rotate about an axis formed by laser beam 113 such that articulated mirror 112 may move closer to and further from generator 110, and rotate about laser beam 113 emitted by generator 110. Articulated mirror 112 may be configured to rotate about an axis (as shown in Figure 5) or otherwise tilt in one or more direction such that it is capable of manipulating laser beam 113.

The position of articulated mirror 112 may be adjusted directly (*e.g*., tilted) or indirectly (*e.g*., by manipulation of rod 111) by controller 120. Controller 120 may include any components, elements, software, *etc.* that may be used to implement any embodiment disclosed herein.

In an embodiment, controller 120 may include axis rotation control output 121 that may be configured to direct, instruct, or otherwise cause rod 111 to rotate about an axis associated with laser beam 113. Controller 120 may also include linear control output 122 that may be configured to direct, instruct, or otherwise cause rod 111 to extend out of or retract into, or otherwise move closer to or further from, generator 110. Controller 120 may also include tilt control output 123 that may be configured to direct, instruct, or otherwise cause articulated mirror 112 to tilt or otherwise rotate about an axis. Controller 120 may also include power control output 124 that may be configured to direct, instruct, or otherwise cause generator 110 to stop or start emitting laser beam 113, or alternately to raise, lower or otherwise put in place or move shutter 160 that prevents and permits the emission of laser beam 113 outside the housing of generator 110. Power control output 124 may also, or instead, direct, instruct, or otherwise cause generator 110 to vary the intensity and/or power of laser beam 113 and/or alter any characteristic of laser beam 113 as it is emitted from generator 110.

Generator 110 may be used to direct laser beam 113 onto one or more surfaces of object 130 in order to machine or otherwise remove some portion of object 130. Object 130 may be any object that is capable of being machined by a laser beam or any other emission of generator 110. In an embodiment, object 130 may be an airfoil of any type and may be constructed of a ceramic matrix composite material. Generator 110 and the related components may be used to shape, machine, or otherwise change the internal structure of object 130. For example, desired changes to the internal structure of object 130 may be those set out by dashed lines 131. Generator 110 and related components maybe used to remove material from the internal cavity of object 130 so that the internal cavity has the shape as shown by dashed lines 131. Dashed lines 131 may represent a schematic, map, plan, instructions, or other description of a desired shape or form that is being created using material removal by the disclosed systems and methods. Such schematic, map, plan, instructions, etc. may be configured in controller 120, allowing controller 120 to precisely and accurately manipulate other components of the disclosed system to form the desired shape.

In some cases, because the internal cavity of object 130 is internal to object 130, it may be difficult or impossible to visually monitor the emission of laser beam 113 to see whether the removal of material by laser beam 113 is occurring as desired or expected. For example, the internal cavity of object 130 may be small enough that other means of monitoring the material removal process (*e.g*., insertion of small camera) are not possible. Alternatively, the cost of such alternative means of monitoring the material removal process may be too high compared to the use of one or more embodiments as disclosed herein. Thus, a subsystem that detects the material removal process, such as thermal sensor 140, may be used in an embodiment to detect and monitor the material removal process. Types of thermal sensors that may be used include surface K-type (*e.g*., dissimilar metal welded) thermocouples (TC), silicon diode based temperature sensors, infrared thermometer sensors that may include a built-in distance measurement capability, planar sensor panels that may be constructed of a plurality of TCs that may be installed in an array grid, and transient infrared signals emitters with thermal measurements taken against the laser (note that a pulse laser may be used, and such pulsing may be used to allow laser cutting to off gas during operation). Any of these sensors or any other type of sensor may be mounted on a mounting piece with an adhesive or mounting hardware. In an embodiment, thermal sensor 140 may use thermal reflectivity to determine, or provide data that controller 120 may use to determine, the coordinates in three dimensions of the end point or terminal point of laser beam 113 (*i.e.,* where laser beam 113 is presently contacting object 130).

Controller 120 may be configured, for example by a user or operator of the disclosed system, with a type of material of object 130, the desired shapes and depths of material removal desired (*e.g*., following the pattern of dashed line 131), and distance 150. Distance 150 may be determined by determining the precise location of both object 130 and thermal sensor 140, or distance 150 may be determined as the material removal process executes, for example by using one or more distance sensors 141 that may be configured to detect distance 150 between object 130 and thermal sensor 140. Note that in some embodiments, thermal sensor 140 may be placed directly upon object 130, and therefore distance 150 may be near zero. Using the data regarding the type of material of object 130, the desired shapes and depths of material removal desired, and distance 150, controller 120 may then automatically control the direction and intensity of laser beam 113 using various output 121, 122, 123, and 124 based on the detected thermal data collected by thermal sensor 140 and provided to collector 120 via feedback input 125.

For example, laser beam 113 may be presently directed at an area of object 130 where a shape of dashed line 131 is to be created by removing material from object 130. Thermal sensor 140 may detect, on the exterior of object 130, the heat generated by laser beam 113 removing material of object 130. Thermal sensor 140 may transmit this data to controller 120 via input 125. Controller 120 may be configured with, or configured to determine, that particular heat levels correspond to a particular depths or thicknesses of material of object 130, in an embodiment, using other data as well, such as distance 150, characteristics of the material of which object 130 is constructed, the type of laser of laser beam 113, the current location and/or position of laser beam 113 and/or components such as rod 111 and articulated mirror 112 that affect the direction and position of laser beam 113, *etc.* Controller 120 may determine when the heat level detected at a particular area of object 130 corresponds to a desired depth or thickness of the material of object 130 at that particular area, such as that of dashed line 131. Upon such a determination, controller 120 may instruct or otherwise cause generator 110 to stop emitting laser beam 113. Alternatively, controller 120 may instruct or otherwise cause generator 110 to adjust one or more of rod 111 and articulated mirror 112 so that laser beam 113 is directed to a different area. All such embodiments are contemplated as within the scope of the present disclosure.

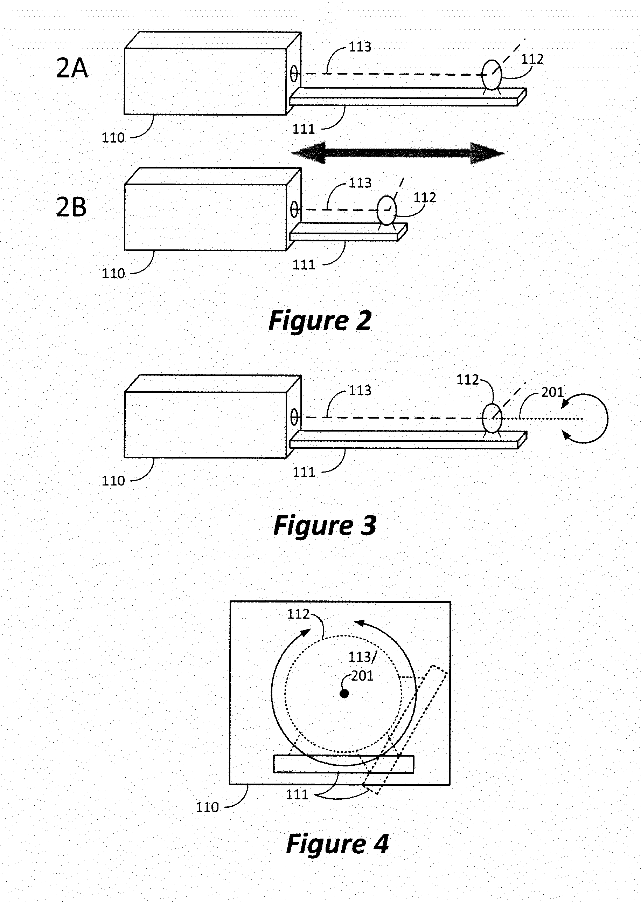

Figure 2 provides a more detailed view of the manipulation of components of generator 110 that may be provided in an embodiment. In Figure 2, at position 2A, rod 111 is extended further out from the housing of generator 110 than it is at position 2B. Thus, by extending and retracting rod 111, articulated mirror 112 may be moved closer to and further from generator 110, allowing it to be placed in a desired location for laser machining.

Figure 3 provides another more detailed view of the manipulation of components of generator 110 that may be provided in an embodiment. Rod 111 may be rotated about cylindrical axis 201 that may be created by laser beam 113. Figure 4 illustrates a frontal view of generator 110 and the rotational configuration of rod 111. This embodiment allows further refinement of the point of contact of laser beam 113, especially when used in conjunction with articulation of mirror 112 as described herein.

Figure 5 also provides a more detailed view of the manipulation of components of generator 110 that may be provided in an embodiment. In Figure 5, closer side view of articulated mirror 112 is shown. As seen in Figure 5, articulated mirror 112 may be rotated along axis 510 that may be parallel to the diameter of articulated mirror 112, providing for manipulation of the end point of laser beam 113. To allow for this manipulation, articulated mirror 112 may be mounted on base 501 that may be configured with one or more motors of any type that may rotate articulated mirror 112 about axis 510. For example, when articulated mirror 112 is rotated to be in position 520A, laser beam 113 may be directed by articulated mirror 112 in direction 520B. Similarly, when articulated mirror 112 is rotated to be in position 530A, laser beam 113 may be directed by articulated mirror 112 in direction 530B. Any degree of rotation and means of causing such rotation of articulated mirror is contemplated as within the scope of the present disclosure.

As will be appreciated, the combination of the articulated mirror and rotating, extending and receding rod upon which such a mirror may be mounted may provide a means for directing a laser beam in a vast number of directions.

In order to ensure that a laser beam manipulated as described herein is accurately and precisely removing material from an internal cavity, one or more thermal sensors as described herein may be used to monitor the material removal. In an embodiment, three dimensional information may be used, for example by a controller as described herein, to determine the location of contact with the material by the laser beam (may be referred to herein as "contact point"). By using a single thermal sensor, the contact point may be readily determined in two dimensions, for example as compared to the surface of the material (*i.e., x* and *y* coordinates), with various means used to determine a depth dimension (*i.e., z* coordinate).

In an embodiment, a thermal sensor may use the pulse energy of the laser beam to determine a contact point. For example, when a laser beam is emitted in an internal cavity, there is a certain amount of time that will pass before the energy of the laser beam can be detected on the outside of the object surrounding the internal cavity. This amount of time is dependent on the thickness of the material between the contact point and the external surface of the object. A controller 120 that is controlling both the laser beam generator 110 and receiving input from the thermal detector 140 may calculate the *z* location of contact point (*i.e.,* the depth at which the contact point is located compared to the exterior surface, or the thickness of the material between the contact point and the exterior surface) based on the amount of time that passes before the energy of the laser beam is be detected on the outside of the object surrounding the internal cavity and various other variables. Such variables may include the distance between the thermal sensor and the surface of the object, the material from which the object is constructed, propagation time of the laser pulse from the generator to the contact point, and any other variable or value that may be used to determine a thickness of the material at the contact point relative to the surface.

In another embodiment, a system as described herein may use two or more thermal sensors to determine an exact location of a contact point. Figure 6 illustrates an exemplary embodiment of such a system. Laser 113 beam may be emitted and manipulated by articulated mirror 112 (as it is articulated via base 501 and rod 111). Laser beam 113 may be making contact with the material of object 501 at contact point 610. Thermal sensors 621 and 622 may be located on the exterior of object 501 and may be detecting the thermal energy produced by laser beam 113. Using the x and *y* coordinates data collected by each of thermal sensors 621 and 622, a controller (not shown) may extrapolate or otherwise determine a depth of contact point 610 or thickness of material between contact point 610 and the surface of object 601 (*i.e.,* a *z* coordinate of contact point 610). In an embodiment, sensor 621 may be tuned to a different wavelength than sensor 622 and the temperature may be determined based on the ratio of measurements taken by each of sensors 621 and 622. This may obviate the need for knowing or determining the emissivity of the material of 501 in order to determine a temperature and a location of a contact point.

Note that alternate means are also contemplated for determining a three-dimensional location of a contact point. For example, one or more thermal sensors may also emit energy of any detectable type that may reflect back to such thermal sensors and be used by a controller to determine a depth or *z* coordinate for a contact point. Any other means or methods of determining a precise location of a contact point are contemplated as within the scope of the present disclosure.

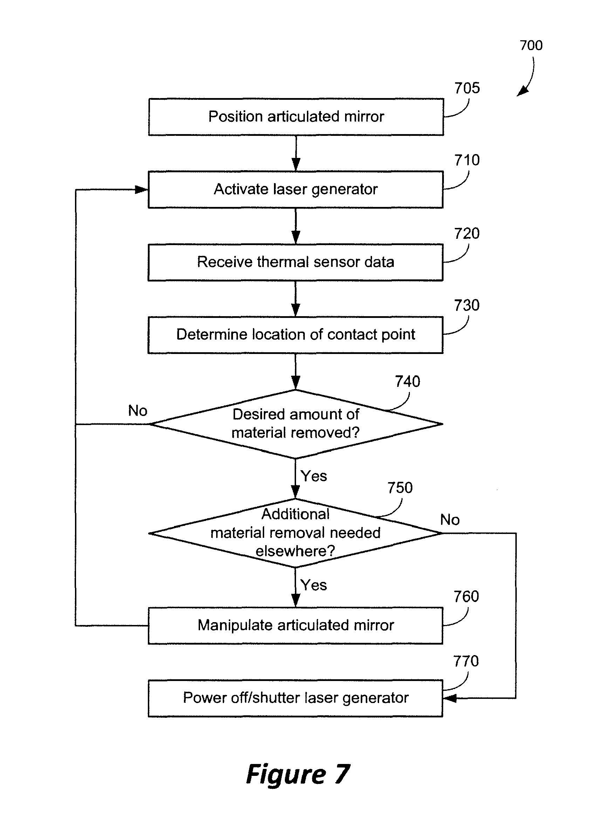

Figure 7 illustrates a non-limiting exemplary method 700 of implementing the present subject matter. Note that any of the activities and/or functions described in relation to method 700 may be performed individually, in combination with any of the other functions and/or activities described in regard to method 700, and/or in combination with any other activities and/or functions. All such embodiments are contemplated as within the scope of the present disclosure.

At block 705, an articulated mirror of a system such as those described herein may be placed in an initial position. This may be accomplished by manually positioning the articulated mirror, or automatically performed by, for example, a controller as described herein. At block 710, a laser generator may be activated to generate a laser beam that may then remove material from an object. The laser beam may be manipulated or otherwise redirected by the articulated mirror of the system to remove material from, for example, an internal cavity of an airfoil.

At block 720, data may be collected or received from one or more thermal sensors. Such data may be continuously received from a thermal sensor configured to continuously detect and collect such data. Alternatively, such data may be received periodically from a thermal sensor configured to transmit such data periodically. In another alternative, such data may be collected periodically from a thermal sensor, for example by polling such a sensor. In embodiments that us periodic data collection, the period may be appropriately set for the configuration. For example, for materials that are quickly removed by the type and power of laser in use, data may be collected every few milliseconds or nanoseconds. For systems operating on material that takes longer to remove, the polling or data collection interval may be longer.

At block 730, a determination may be made of the current location of the contact. In an embodiment, the *x, y,* and *z* coordinates of the present contact point may be determined based on data from one or more thermal sensors received or collected at block 720 using any means or method described herein. At block 740, a determination may be made as to whether the desired amount of material has been removed from the present contact point. This determination may be made by comparing the present location of the contact point to a mapping, plan, schematic, or any other data that may be used to provide a final design for the object currently being machined. This process may be automated, with the comparison being performed by a computer processor configured in a controller and executing software with instructions to perform the comparison. Alternatively, software executing on a processor in a separate device in communication with a controller may perform the comparison. Any other means or method of performing the comparison may be used.

If the desired amount of material has not yet been removed from the contact point, at block 710 the laser generator may be activated again, or allowed or instructed to continue generating the laser beam. Note that at block 710, in any embodiment, the laser generator may be continuously emitting a laser beam, continuously emitting laser beam pulses (*i.e*., alternating between emitting a laser beam for a period of time and not emitting a laser beam for another period of time), or only emitting laser beam pulses on command by a controller, in an embodiment for only a period of time as specified by the controller. In a controller-commanded laser generator system, a controller may instruct a laser generator to emit a laser beam for a certain period of time. Alternatively, a laser generator may be relatively unintelligent, and a controller may activate it and deactivate it for periods of time as needed. All such embodiments and variations thereof contemplated as within the scope of the present disclosure.

If, at block 740, the desired amount of material has been determined to have been removed at the contact point, at block 750 a determination may be made as to whether there is any additional material to be removed. If there is not, for example, if all material to be removed has been removed, or if a fault, error, some other condition, or an instruction received from an operator or other system or device dictates that further material removal should not be performed at the present time, at block 770, the laser generator may be deactivated, powered off, instructed to close a shutter blocking the laser, or otherwise instructed or caused to cease emitting the laser beam outside its housing.

If, at block 750, it is determined that additional material should be removed from somewhere other than the contact point, at block 760 the articulated mirror may be manipulated using any means described herein in order to move the contact point to a different area. At block 710, the laser generator may be instructed may be activated again, or allowed or instructed to resume or continue generating the laser beam.

Rather than stopping laser beam generation for articulated mirror manipulation, the articulated mirror may be manipulated while the laser beam is being generated, thereby removing material while the contact point of the laser beam is being moved. As described herein, data may be collected and processed to ensure that the appropriate amount of material is being removed. In an embodiment, a laser beam contact point may be moved continuously which may provide advantages when working with certain types of materials, such as reducing heat build-up in a particular area. Thermal sensor data may be continuously, or nearly continuously, collected and processed in such an embodiment. A plan of material removal may be established and configured in the controller to create an efficient material removal path for such an embodiment.

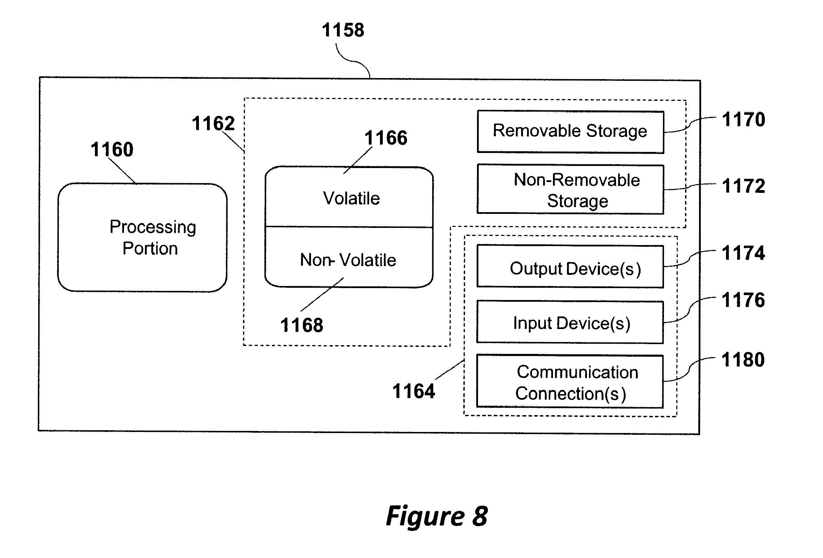

Figure 8 is a block diagram of an example processor 1158 that may be employed providing the technical effect of any of the embodiments described herein. Processor 1158 may be used as a component of any embodiment disclosed herein, including as one or more components of a controller that controls a laser generator, a device that communicates with and instructs such a controller, as one or more components of a system that performs laser machining as disclosed herein, and/or as one or more components of any related equipment, system, or subsystem that may implement any portion of the subject matter described herein. It is emphasized that the block diagram depicted in Figure 8 is exemplary and not intended to imply a specific implementation. Thus, the processor 1158 can be implemented in a single processor or multiple processors. Multiple processors can be distributed or centrally located. Multiple processors can communicate wirelessly, via hard wire, or a combination thereof. Processor 1158 may include circuitry and other components that enable processor 1158 to perform any of the functions and methods described herein. Such circuitry and other components may also enable processor 1158 to communicate and/or interact with other devices and components, for example any other component of any device disclosed herein or any other device, in such a manner as to enable processor 1158 and such other devices and/or components to perform any of the disclosed functions and methods.

As depicted in Figure 8, the processor 1158 comprises a processing portion 1160, a memory portion 1162, and an input/output portion 1164. The processing portion 1160, memory portion 1162, and input/output portion 1164 are coupled together (coupling not shown in Figure 8) to allow communications between these portions. The processing portion 1160 executes instructions that may be compiled or interpreted from computer programs created using a variety of known programming languages and/or technologies, including, without limitation, and either alone or in combination, Java™, C, C++, Visual Basic, Java Script, Perl, etc. In general, a processor (*e.g*., a microprocessor) receives instructions, e.g., from a memory, a computer-readable medium, etc., and executes these instructions, thereby performing one or more processes, including one or more of the processes described herein. Such instructions and other data may be stored and transmitted using a variety of known computer-readable media. The input/output portion 1164 is capable of providing and/or receiving components, commands, and/or instructions, utilized to, for example, provide instructions to one or more laser generator, receive data from one or more thermal sensors, and/or perform any other function described herein.

The processor 1158 may be implemented as a client processor and/or a server processor. In a basic configuration, the processor 1158 may include at least one processing portion 1160 and memory portion 1162. The memory portion 1162 can store any information utilized in conjunction with determining contact points, determining contact point coordinates, determining whether additional material should be removed from an object, *etc.* For example, the memory portion is capable of schematics, mappings, etc. Depending upon the exact configuration and type of processor, the memory portion 1162 may be volatile (such as RAM) 1166, nonvolatile (such as ROM, flash memory, *etc*.) 1168, or a combination thereof. The processor 1158 may have additional features/functionality. For example, the processor 1158 may include additional storage (removable storage 1170 and/or non-removable storage 1172) including, but not limited to, magnetic or optical disks, tape, flash, smart cards or a combination thereof. Computer storage media, such as memory and storage elements 1162, 1170, 1172, 1166, and 1168, may include volatile and nonvolatile, removable and non-removable media implemented in any method or technology for storage of information such as computer-readable instructions, data structures, program modules, or other data. Computer storage media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, universal serial bus (USB) compatible memory, smart cards, or any other tangible medium that may be used to store the desired information and that may be accessed by the processor 1158. Any such computer storage media may be part of the processor 1158.

The processor 1158 may also comprise the communications connection(s) 1180 that allow the processor 1158 to communicate with other devices, for example through any type of wired or wireless communications means. Communications connection(s) 1180 is an example of communication media. Communication media typically embody computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection and wireless media such as acoustic, RF, infrared, cellular, and other wireless media. The term computer-readable media as used herein includes both storage media and communication media. The processor 1158 may have input device(s) 1176 such as keyboard, keypad, mouse, pen, voice input device, touch input device, etc. Output device(s) 1174 such as a display, speakers, printer, *etc.* also can be included.

This written description uses examples to disclose the subject matter contained herein, including the best mode, and also to enable any person skilled in the art to practice the invention, including making and using any devices or systems and performing any incorporated methods. The patentable scope of this disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A laser machining system comprising:
a laser generator (110);
a rod (111) configured to extend from and retract towards the laser generator (110);
an articulated mirror (112) mounted on the rod (111) and configured to reflect a laser beam (113) generated by the laser generator (110);
a sensor (140,141); and
a controller (120) configured to:
receive data from the sensor (140,141), and
manipulate, based on the data, the rod (111) and the articulated mirror (112) to direct the laser beam (113) generated by the laser generator (110).

2. The system of claim 1, wherein the data comprises at least one of a set of two-dimensional coordinates of a contact point (610) of the laser beam (113) with an object (130), and a set of three-dimensional coordinates of the contact point (610) of the laser beam (113) with the object (130).

3. The system of claim 2, wherein the data comprises two-dimensional coordinates of a contact point (610) of the laser beam (113) with an object (130) and additional data, and wherein the controller (120) is configured to determine three-dimensional coordinates of the contact point (610) based on the two-dimensional coordinates and the additional data.

4. The system of claim 3, wherein the additional data comprises time data.

5. The system of claim 2 or 3, wherein the controller (120) is configured with second additional data, and configured to determine three-dimensional coordinates of the contact point (610) based on the two-dimensional coordinates, the additional data, and the second additional data.

6. The system of claim 5, wherein the second additional data comprises at least one of a power of the laser beam (113), a material of the object (130), a schematic, and a distance (150) between the contact point (610) and an external surface of the object (130).

7. The system of any of claims 1 to 6, wherein the controller is configured to determine, based on the data, to power off the laser generator.

8. The system of any of claims 1 to 7, wherein the controller is configured with a schematic, and wherein the controller is configured to manipulate the rod and the articulated mirror based on the data and the schematic.

9. The system of any preceding claim, wherein the controller (120) is configured to extend and retract the rod (111) relative to the laser generator (110).

10. The system of any preceding claim, wherein the controller (120) is configured to rotate the rod (111) about an axis (201) formed by the laser beam. (113).

11. The system of any preceding claim, wherein the articulated mirror (112) is configured to rotate about an axis (510) formed by a diameter of the articulated mirror (112).

12. The system of claim 11, wherein the controller (120) is configured to rotate the articulated mirror (112) about the axis (510).

13. A method (700) comprising:
activating (710) a laser generator (110) to generate a laser beam (113) directed at an articulated mirror (112) mounted on a rod (111) configured to extend from and retract towards the laser generator (110);
receiving (720) data from at least one sensor (140,141) configured proximate to a contact point (610) of the laser beam (113) on an object (130);
determining (730) a location of the contact point (610);
determining (740-760) whether to manipulate at least one of the rod (111) and the articulated mirror (112) based on the location.

14. The method of claim 13, wherein determining whether to manipulate at least one of the rod (111) and the articulated mirror (112) comprises determining (740) that a predetermined amount of material has been removed from the contact point (610).

15. The method of claim 14, wherein, responsive to determining that the predetermined amount of the material has been removed from the contact point (610), manipulating at least one of the rod (111) and the articulated mirror (112), or deactivating the laser generator (110).

16. The method of any of claims 13 to 15, wherein determining the location of the contact point (610) comprises determining three-dimensional coordinates of the contact point (610) based on the data.
